(19) Europäisches Patentamt
European Patent Office
Office européen des brevets

(11) **EP 4 513 792 A1**

(12) **EUROPEAN PATENT APPLICATION**

(43) Date of publication:
**26.02.2025 Bulletin 2025/09**

(21) Application number: **24196010.3**

(22) Date of filing: **22.08.2024**

(51) International Patent Classification (IPC):
***H04J 3/06*** (2006.01)       ***H04L 43/0852*** (2022.01)

(52) Cooperative Patent Classification (CPC):
**H04J 3/0667; H04L 43/0852; H04J 3/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 GB 202312994**

(71) Applicant: **Calnex Solutions Ltd
West Lothian EH49 7LR (GB)**

(72) Inventors:
• **RUFFINI, Stefano
Linlithgow, EH49 7LR (GB)**
• **POTTER, Alan
Linlithgow, EH49 7LR (GB)**
• **MOSSOM, Stephen
Linlithgow, EH49 7LR (GB)**

(74) Representative: **Marks & Clerk LLP
15 Fetter Lane
London EC4A 1BW (GB)**

(54) **METHOD FOR DETECTING ASYMMETRIC PATH DELAY CHANGES IN A SYNCHRONISATION NETWORK**

(57)     A method for detecting asymmetric path delay changes in a synchronisation network comprises: monitoring a first path delay and a second path delay over a first sample period and a second sample period, wherein the first path delay is a reported time taken for a first packet transmitted by a first node of the network to be received by a second node of the network, and the second path delay is a time taken for a second packet transmitted by the second node of the network to be received by the first node of the network; determining that a change in one or both of the first and second path delays between the first sample period and the second sample period exceeds a first threshold; and determining, when it is determined that the first threshold is exceeded and when a difference between the first and second path delays changes between the first sample period and the second sample period, that the change in one or both of the first and second path delays is an asymmetric path delay change.

Figure 2b

2000

Monitor 1st and 2nd path delays over 1st and 2nd sample period — S2100

Δ 1st and/or 2nd path delay > 1st threshold? — S2200
NO / YES

Δ (1st path delay – 2nd path delay) > 2nd threshold? — S2300
NO / YES

Apply network correction — S2400

EP 4 513 792 A1

## Description

## FIELD

The present disclosure relates to a method of detecting asymmetric changes to path delays in a synchronization network. In particular, the disclosure relates to detecting and compensating for asymmetric changes in path delays between nodes in a synchronisation network. Also disclosed is a network management system and synchronisation network configured to perform the disclosed method.

## BACKGROUND

Time synchronisation networks typically rely on access to an accurate source of timing (e.g. a Global Navigation Satellites System (GNSS), reference) or periodic manual intervention in order to maintain synchronisation between reference clocks. When, for example, such a source is not available locally, networks which employ two-way timing protocols (e.g. Precision Time Protocol (PTP)) distributing timing from a remote source of time (e.g., GNSS receiver), assume symmetric transmission paths between adjacent nodes in order to estimate path delay (starting from the round-trip delay, half of this is assumed as an acceptable estimate of the path delay) and compensate for any asynchronicities which may develop over time as clocks drift apart.

Any known or manually measured asymmetry in path delays can be accounted for. Any unknown asymmetric changes in path delays results in a time error which can resemble a loss or degradation in synchronisation between reference clocks and ultimately lead to failures in the network environment e.g. 5G TDD networks can tolerate a maximum 3uS time error between the reference clocks of adjacent nodes (or 1.5 us with respect to a common reference).

Asymmetric changes in path delay can be caused by a number of different sources. Different wavelengths may be used to transmit messages to/from particular nodes and in two fibre systems the length of each fibre may not be identical. This can be manually compensated for at installation but can also cause additional sudden changes in transmission delays during any network rearrangements or rerouting requiring further downtime for expensive manual compensation to be measured and applied. Some sources of asymmetrical changes in path delay cannot be accounted for at installation such as the path delay variation (PDV) observed at different network loads in networks with only partial timing support (PTS) which may change over time, and the buffer values in time division multiplexing (TDM) systems which can be different at every power up. These require specialised and expensive hardware to be installed in order to mitigate any negative effects and the methods used are neither standardised nor always feasible.

It is therefore desirable to provide a standardised method of detecting asymmetric changes in path delays in synchronisation networks and networks which employ such a method to maintain synchronicity.

It is therefore an aim of at least one embodiment of at least one aspect of the present disclosure to obviate or at least mitigate at least one of the above identified shortcomings of the prior art.

## SUMMARY

Various aspects of the present invention are defined in the independent claims. Some preferred features are defined in the dependent claims.

According to a first aspect of the present disclosure there is provided a method for detecting asymmetric path delay changes in a synchronisation network, the method comprising:

    monitoring a first path delay and a second path delay over a first sample period and a second sample period, wherein the first path delay is a reported time taken for a first packet transmitted by a first node of the network to be received by a second node of the network, and the second path delay is a time taken for a second packet transmitted by the second node of the network to be received by the first node of the network;
    determining that a change in one or both of the first and second path delays between the first sample period and the second sample period exceeds a first threshold; and
    determining, when it is determined that the first threshold is exceeded and when a difference between the first and second path delays changes between the first sample period and the second sample period, that the change in one or both of the first and second path delays is an asymmetric path delay change.

Advantageously, by monitoring the network and detecting changes in path delays of packets transmitted to and from two nodes in a synchronisation network, any asymmetrical changes in the path delays may be detected and compensated for. In this way automatic detection and compensation may be implemented in a synchronisation network.

For example, as soon as a change in the first and/or second path delay exceeds the first threshold, which may be a predefined threshold, a further analysis may evaluate whether asymmetrical change in path delays has actually occurred. For example, if both the first and second path delays change by the same amount, i.e., if the difference between the first and second path delays does not change, then it may be determined that no asymmetrical change in path delays has occurred. In other instances, where an asymmetric path delay change is generated, such an asymmetric path delay change may be detected by the disclosed method.

This method of monitoring may be particularly advantageous in the case where a node in a synchronization network (e.g. a lower level node in the hierarchy of a multilayer network) temporarily, or otherwise, does not have direct access to an external accurate timing source e.g. one of the widely accessible global navigation satellite systems (GNSS) e.g. GPS, Galileo, GLONASS or the like to maintain synchronicity between reference clocks of the respective nodes.

It will be appreciated that the synchronisation network may comprise one or more further nodes and the path delays between each of the one or more further nodes and/or the path delays between the first and/or second node and each of the one or more further nodes may be simultaneously or sequentially monitored. In this way, asymmetric path delay changes may be determined between many different nodes in a synchronisation network.

It will be appreciated that either or both of the first and second nodes may be known in the art as a time transmitter, which may be used as an alternative to archaic terms such as master, master node or master device or alternatively as a time receiver, which may be used as an alternative to archaic terms such as slave, slave node or slave device. These terms may be used interchangeably within the present disclosure.

The term "packet" used in the present disclosure may refer to at least a unit of data. In a non-limiting example, a packet may typically include control information relating to the source and destination node, and a payload. The payload may contain data relating to the transmission time of the packet or previously transmitted packets such that the first and second path delay can be determined.

The term "path delay" used in the present disclosure may refer to a propagation delay, or in other words a transit or travel time of a packet of data transmitted from the first node and received at the second node. The transit time may be the difference between the time the packet was transmitted as determined by a clock (e.g. a reference clock) of the first node and the time the packet was received as determined by a clock (e.g. a reference clock) of the second node.

It will also be understood that the terms "first" and "second" are simply used in the present disclosure to label the relevant elements for the ease of description, and do not necessarily imply any limitations to the sequence or the total number of the relevant elements.

This method may be implemented using standard network protocols in the field e.g. IEEE1588, and related performance monitoring parameters as defined by IEEE1588 Annex J or ITU-T G.8275 Annex F or the like. The first and second path delays may be automatically monitored by either of the first and second nodes of the network in a network employing a two-way timing protocol e.g. precision time protocol (PTP) or network time protocol (NTP). In this way asymmetric path delays can be detected without requiring additional devices or proprietary protocols to be deployed into the network environment.

It would be appreciated that monitoring the first and second path delays may comprise sampling the 'current data record' from each node over the respective sample period. The current data record may be defined in the relevant standard to which the network conforms. For example, IEEE 1588 Annex J provides an option for collecting performance monitoring PTP data. Data is collected every 15 minutes, and the last 24 hours are stored in a circular buffer. For this standard the current or 'real time' value is stored in index 0 of the circular buffer and updated depending on the message rate of the network.

With the expression "a change in one or both of the first and second path delays... exceeds a first threshold", it is meant that either the change in the first path delay, the change in the second path delay or the change in both the first and second path delays exceeds the first threshold.

With the expression "a difference between the first and second path delays changes between the first sample period and the second sample period", it is meant that a difference between the first and second path delays as monitored during the second sample period has changed relative to a difference between the first and second path delays as monitored during the first sample period. No change in the difference between the first and second sample periods may indicate either no change in the first and/or second path delays or a symmetric change in the first and second path delays.

The method may further comprise: applying, when it is determined that the first threshold is exceeded and when a change in the difference between the first and second path delays between the first sample period and the second sample period exceeds a second threshold, a correction to the network. The correction may be based on the change in the difference between the first and second path delays between the first sample period and the second sample period.

For example, once it is determined that an asymmetric change in path delays has occurred, and that a size of the change is above a threshold, e.g. the second threshold, the asymmetric change may be corrected for to avoid excessive timing errors and/or potential failures in the network. By only making a correction when the asymmetric change in path delays is more than the second threshold, excessive and/or unnecessary changes to the network may be avoided by effectively filtering out small changes which would have no material effect on the operation of the network.

The method may be used to compensate for asymmetric path delays following installation, repair, servicing or failure or the like of network elements, e.g. nodes and/or any communication medium between nodes. Alternatively/additionally the method may be used to monitor the network in real time and automatically detect and compensate for unexpected changes in the network environment affecting path delays between nodes. In this way, compensation for asymmetric changes in path delays may be applied without manual intervention, resulting in reduction or elimination of periods with the network out of timing requirements.

The correction to the network may comprise adjusting a dedicated asymmetric path delay correction parameter in the network for the second node; for example, IEEE1588 defines a parameter "delayAsymmetry". Alternatively, the first and/or second node may be configured to take account of the asymmetric change in path delays when calculating the mean path delay or clock offset between the first and second nodes. The amount of adjustment may be based on the determined size asymmetric path delay change in the network.

The duration of the first sample period and/or the second sample period may be less than a time constant of a synchronous clock of the synchronisation network.

In order to maintain synchronicity between the reference clocks of the plurality of network nodes in a synchronisation network, two-way timing protocols (e.g. PTP, NTP), in addition to being used to distribute timing, may also be used to monitor the synchronicity and automatically adjust the clocks as required. An asymmetric change in path delays between nodes may produce a similar effect to a loss of synchronicity between clocks and the synchronisation network will adjust the clock, commonly within one time constant of the clock (e.g. within 2s for a 0.1Hz bandwidth clock). This may hide or mask the asymmetric path delay change if it is not detected within one time constant of the reference clock.

By setting the first and/or second sample periods to a defined portion of the time constant of the reference clock e.g. 1/10 of the time constant of the reference clock the asymmetric path delay change may still be visible (not yet significantly averaged by the clock correction system) and at the same time it may be more likely that information is correct (spikes removed; change of delays is complete, etc.).

For example, for a synchronous clock with a time constant of about 2 seconds (corresponding to about 0.1 Hz bandwidth), the samples period may be 200 ms, that in case of a 16 packet per second message rate (as per ITU-T G.8275) corresponds to 3 samples.

The first threshold may be based on an expected dynamic Time Error, dTE, of the network.

The first threshold may be a value that is larger than the expected wander and jitter present in the network, i.e., in other words larger than an expected dynamic Time Error dTE. For example, in a network conforming to the ITU-T G.8275 standard, 200-300 ns is a typical worst case dTE. Therefore, the threshold may be defined as 1.5 times the expected dTE, i.e., 400 ns. In this way any expected variation in path delays can be filtered out of the determined changes, reducing the number of false flag detections of asymmetric path delay changes.

The expected dTE of the network may be defined by ITU-T or IEEE or any other suitable standard to which the network confirms. Alternatively, the expected dTE may be manually determined before, during and/or after installation of the network. The dTE may be determined in real time based on real time measurements of the wander and jitter of the network.

The second threshold may be based on the expected dTE of the network and/or a maximum time error which may result in a failure of the network.

The second threshold may be a value that is larger than the expected dTE of the network and significantly lower than the maximum Time Error (mTE) that can be acceptable in a network (to be added to the expected normal Time Error) without resulting in network errors or failure. For example, if the mTE for the network is 1.1 us, a reasonable value for the second threshold may be 500 ns.

With the expression "a failure of the network", it is meant that the network is no longer performing at a functionally acceptable level. This may comprise a complete failure of the network, the exceeding of a threshold of errors per sample period, a loss or degradation of communication between network nodes and/or the like. The functionally acceptable level of performance of the network may be defined in the standard to which the network conforms e.g. ITU-T or IEEE.

The mTE of the network may be defined by ITU-T or IEEE 1588 or any other suitable standard to which the network confirms. Alternatively, the mTE may be manually determined before, during and/or after installation of the network. The mTE may alternatively/additionally be referred to as the "maxTE", "max|TE|" (as defined by ITU-T), or the like.

Monitoring the first path delay and the second path delay may comprise determining an average value of the respective first path delay and/or the second path delay over the first sample period and/or the second sample period.

In order to exclude potential abnormal single point spikes in the first and/or second path delays, the average of the path delays over the sample period may be compared with the most recent determined value. If it is only a spike, the trend would show a small spike in the average while if it is a real change of path delay, the average would slightly, consistently increase/decrease. A spike in the first and/or second path delay may be caused by background noise, interference or the like.

The current value of the average of each of the path delays may be determined, depending on the standard to which the network conforms. Alternatively/additionally, the average values of path delay may be determined using individual time stamped path delay samples and/or the respective determined transmit/receive time.

Monitoring the first path delay and the second path delay may comprise determining a maximum value of the respective first path delay and/or the second path delay over the first sample period and/or the second sample period.

Monitoring the first path delay and the second path delay may comprise determining the minimum value of the respective first path delay and/or the second path delay over the first sample period and/or the second sample period.

A change in one of the first and second path delays may be detectable one or 2 messages/samples after a change in the other of the first and second path delays is detectable. By determining the maximum and/or the minimum first and second path delays over the first and second sample periods, changes that do not occur simultaneously or that occur over several samples within a sample period may be accurately and reliably detected.

The current value of the maximum and/or minimum of each of the path delays over a predetermined period may be determined, depending on the standard to which the network conforms. Alternatively/additionally the maximum and/or minimum value of path delay may be determined using individual time stamped path delay samples and/or the determined transmit/receive time.

According to a second aspect of the present disclosure there is provided a method of for detecting asymmetric path delay changes in a synchronisation network, said synchronisation network comprising a first node and a plurality of second nodes, the method comprising:

monitoring a plurality of first path delays and a plurality of second path delays over a third sample period and a fourth sample period, wherein each of the first path delays is a reported time taken for a packet transmitted by the first node of the network to be received by one of the plurality of second nodes of the network, and each of the second path delays is a time taken for a packet transmitted by the one of the plurality of second nodes of the network to be received by the first node of the network;

determining that a change in one or both of each of any one of the respective first and second path delays between the third sample period and the fourth sample period exceeds a third threshold; and

performing the method of the first aspect on the respective first and second nodes.

The term "large network" used in the present disclosure may refer to networks wherein the monitoring of every node on the network may create a large amount of network traffic which may affect the performance of the network. In such networks a network controller, which may be an NMS comprised in the first node (or in an external server and/or be distributed across a plurality of nodes, servers or the like), may monitor the respective path delays to and from the first node and each of the plurality of second nodes less often than the monitoring step of the first aspect. Alternatively, each of the plurality of second nodes may internally monitor the respective path delays, for example using a two-way timing protocol as described above.

The length of each of the third and fourth sample periods may be longer than each of the first and second sample periods. The respective path delays to and from respective nodes may be sampled less often in a large network until the third threshold is exceeded. In this way a high level monitoring of the path delays between a large number of nodes can be performed, with the more detailed monitoring directed towards path delays which have sufficiently changed to warrant further investigation. Thus the monitoring activity does not unduly degrade the performance of the network.

If the NMS or one of the second nodes determines that a change in the path delays is greater than a third threshold, which may be the same as the first threshold, this may indicate that an asymmetric change in the path delays has occurred. The NMS can then perform the method of the first aspect for the second node which has detected a change in path delay above the third threshold in order to determine whether an asymmetric change in path delay has occurred and whether corrective action is required.

In this way asymmetric path delay changes in a large synchronisation network may be quickly and accurately detected and corrected for without negatively affecting the performance of the synchronisation network.

It would be appreciated that whether a network is considered a 'large network' would depend on a number of different factors, e.g. the number of nodes, available bandwidth or required performance level. In this case a large network is one where performing the method of the first aspect would prohibitively degrade the performance of the network, cause a failure in the network, or the like.

It would further be appreciated that the term "a plurality of" relevant elements in the present disclosure means two or more of the relevant elements.

At least one of the first and second nodes may comprise full or partial timing support as defined by ITU-T G.8275.

Networks which have full or partial timing support as defined by an industry regulated standard can implement the method of the first or second aspect without any additional specialised or proprietary hardware or software. It would be appreciated that any suitable standard comprising a two-way timing protocol could be used.

According to a third aspect of the present disclosure there is provided a network management system, NMS, comprising a set of computer readable instructions or process protocols or computer code configured such that, when processed by network equipment, permit, control or cause the network equipment, or provide instructions or data for the network equipment, to perform the method of the first or second aspect.

According to a fourth aspect of the present disclosure there is provided a synchronisation network comprising: a plurality of nodes; and the NMS of the third aspect.

One of the plurality of nodes may comprise the NMS.

The network may further comprise test equipment coupled to one or more of the plurality of nodes. The external test equipment may comprise the NMS.

Alternatively, the NMS may be provided in an external piece of test equipment, network or node remote to the synchronisation network. The test equipment may be in line with the transmission path to be measured or may 'tap' into the transmission path without significantly altering the transmission path. By using a remote source of monitoring and/or control the method may be used with asynchronous network nodes which do not support two-way timing protocols fully or partially. In particular, the path delay between a node supporting an appropriate standard and a node which does not fully/partially support the standard may be determined. This may comprise a reverse sync message from nodes which support this feature or any other suitable method.

One or more of the nodes may support Small Form-factor Pluggable (SFP) interface module standard.

Small Form-factor Pluggable (SFP) is a compact, hot-pluggable network interface module format used for both telecommunication and data communications applications. Nodes may not fully/partially support monitoring and/or collection of performance PTP data (e.g. as defined by IEEE1588 Annex J and ITU-T G.8275). Using external test equipment, as described above, and/or by integrating SFP nodes into a network comprising nodes which do support appropriate two-way timing protocol standards any asymmetrical changes in path delays between these nodes can be determined and/or corrected and/or compensated for in the network.

The individual features and/or combinations of features defined above in accordance with any aspect of the present invention or below in relation to any specific embodiment of the invention may be utilised, either separately and individually, alone or in combination with any other defined feature, in any other aspect or embodiment of the invention.

The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilized, either alone or in combination with any other defined feature, in any other aspect or embodiment or to form a further aspect or embodiment of the disclosure.

## BRIEF DESCRIPTION OF THE DRAWINGS

These and other aspects of the present disclosure will now be described, by way of example only, with reference to the accompanying Figures, in which:

Figure 1 is an illustration of a known method of network synchronisation using a Precision Time Protocol.

Figure 2a is a schematic illustration of an example two node synchronisation network.

Figure 2b is a flowchart of a method of detecting asymmetric path delay changes in the synchronisation network of Figure 2a according to an example embodiment of the present disclosure.

Figure 3a is a schematic illustration of an example three node synchronisation network.

Figure 3b is a flowchart of a method of detecting asymmetric path delay changes in the synchronisation network of Figure 3a according to an example embodiment of the present disclosure.

Figure 4 is a schematic illustration of an example detection of an asymmetric delay according to an example embodiment of the present disclosure.

Figure 5 is a schematic illustration of a further example detection of an asymmetric delay according to an example embodiment of the present disclosure.

Figure 6 is a schematic illustration of an example synchronisation network with partial timing support.

In the Figures, like parts are denoted by like reference numerals.

It will be appreciated that the drawings are for illustration purposes only and are not drawn to scale.

## DETAILED DESCRIPTION OF THE DRAWINGS

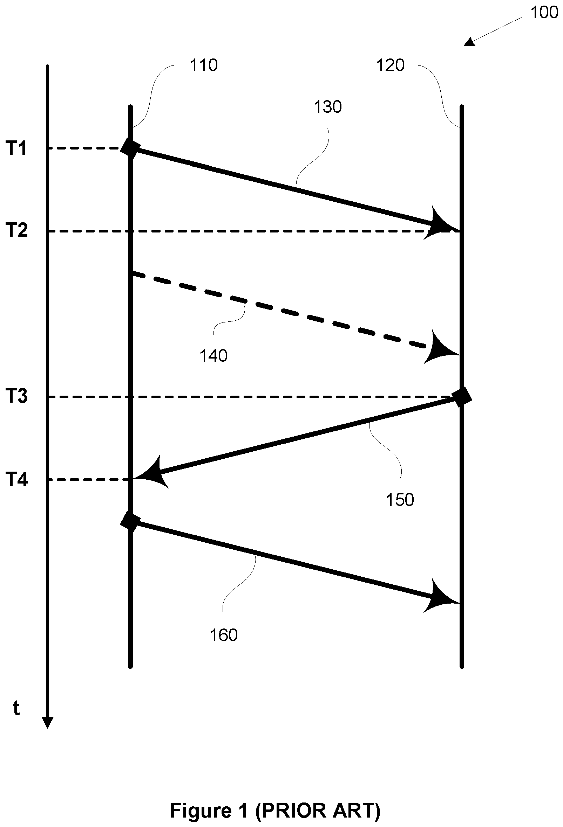

Figure 1 shows an example use 100 of Precision Time Protocol (PTP) as standardised by, for example, IEEE 1588, to calculate mean path delay between a first node 110 (e.g. a master node) and a second node 120 (e.g. a slave node) in a synchronisation network, in addition to determining any clock offset between the two nodes. In a fully synchronised network the local clock of the first node 110 should be synchronised with the local clock of the second node 120.

At a first time T1, as determined by the clock of the first node 110, a "Sync" message 130 is transmitted from the first node 110 to the second node 120. In a network comprising a plurality of second nodes 120 the sync message 130 may be transmitted to all of the second nodes 120 simultaneously or sequentially. The second node 120 receiving the message, determines a second time T2 which is the time the sync message 130 was received by the second node 120, as determined by the clock of the second node 120. The sync message 130 may include the value of the first time T1. Alternatively, if the first node 110 is only able to determine the first time T1 after the sync message 130 has been transmitted, and therefore unable to add the first time T1 to the sync message 130, the first node 110 may send a "Follow_Up" message 140 to the second node 120 including the value of the first time T1.

At a third time T3, as determined by the clock of the second node 120, a "Delay_Req" message 150 is transmitted from the second node 120 to the first node 110. The first node 110 determines a fourth time T4, which is the time the Delay_Req message 150 is received by the first node 110, as determined by the clock of the first node 110. Similar to the transmission of the Sync message 130, if the second node 120 is only able to determine the third time T3 after the Delay_Req message 150 has been transmitted, a second "Follow_up" message (not shown) may be transmitted by the second node 120 to the first node 110 including the value of the third time T3.

The first node 110 responds to the Delay_Req message 150 with a "Delay_Resp" message 160 including the value of the fourth time T4. Through this exchange of messages, the second node 120 obtains the value of the first to fourth times T1, T2, T3 and T4.

The path delay of a message transmitted from the first node 110 to the second node 120 as measured by the clock local to the respective node is then the difference between the second and first times, T2 - T1. The path delay of a message transmitted from the second node 120 to the first node 110 is the difference between the fourth and third times, T4 - T3.

Assuming path symmetry between the first node 110 and the second node 120 (i.e. the path delays are equal), and that the exchange of messages as described above is completed in a short enough time such that it can be considered no change in synchronisation or path delay symmetry occurs over the message exchange period, the mean path delay (MPD) is then given by:

$$\text{Mean Path Delay} = [(T2\text{-}T1) + (T4\text{-}T3)] \div 2$$

Furthermore, the clock offset, e.g. an offset between the clock of the second node 120 and the clock of the first node 110, is given by:

$$\text{Clock Offset} = [(T2\text{-}T1) - (T4\text{-}T3)] \div 2$$

In an example synchronisation network utilising PTP where the first node 110 is a time transmitter e.g. a master node and the second node 120 is a time receiver e.g. a slave node, the clock offset is the offset between the time receiver clock and the time transmitter clock. In this example the time receiver clock can correct itself based on the clock offset to bring it back into synchronicity with the time transmitter clock.

In a synchronisation network utilising PTP, such as the example of Figure 1, it is assumed that the time T2-T1 and the time T4-T3 are equal i.e. that there is path symmetry. It is also assumed that both the first node 110 and the second node 120 are able to accurately measure the local time that the respective messages are transmitted. Any change in path asymmetry will result in an error in the Mean Path Delay and Clock Offset. For example, a 6uS path asymmetry in a synchronisation network, i.e. where T2-T1 is greater than T4-T3 by 6uS, will result in a 3uS time error.

The PTP has no standardised method for determining that the time error is due to an asymmetry in path delays or an asymmetric change in path delays, rather than a clock offset due to a loss or degradation of synchronisation between clocks in the network. Therefore, the clocks will be synchronised as though a clock offset is the cause, potentially leading to failures in the network.

IEEE1588 Annex J and ITU-T G.8275 Annex F provide an option for collecting performance monitoring PTP data. Data is collected every 15 minutes, and the last 24 hours are stored in a circular buffer. ITU-T G.8275 Annex F provides an additional 3-minute granularity and collection over 1 hour. IEEE1588 Annex J has defined a set of parameters based on PTP messages and some statistics (average, minimum, maximum, standard deviation, etc.) that can continuously be collected by the PTP clocks. Additional slots are used for the current value, therefore generally providing incomplete data.

The IEEE1588 defines a per-port parameter "delayAsymmetry" that can be used to compensate for known path delay asymmetries, e.g. after lengthy manual determination during installation, but there is no definition of autonomous real time monitoring or compensation of unknown path delay asymmetries or changes in path delay asymmetries.

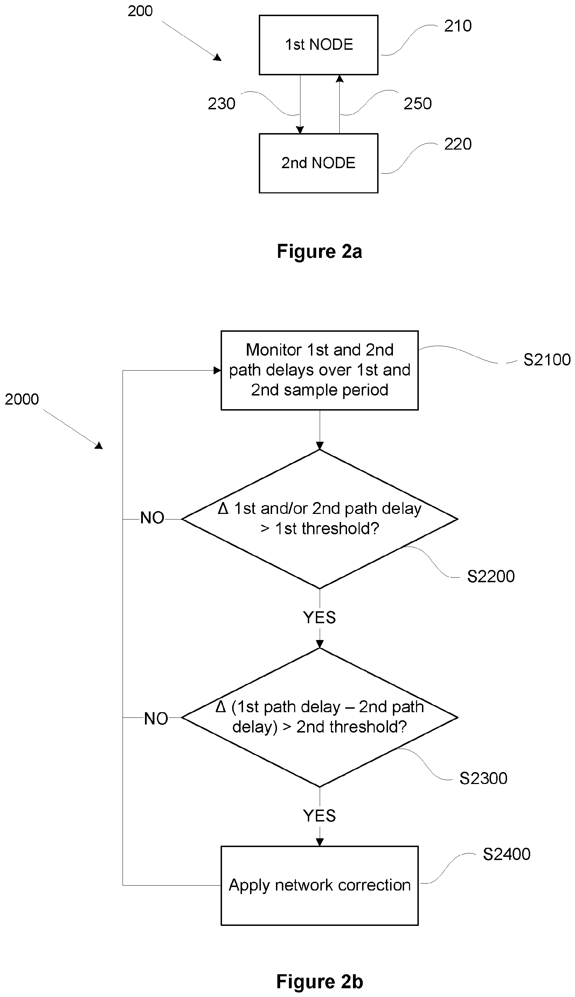

Figure 2a is a schematic illustration of a 'small' synchronisation network 200 complying with the IEEE1588 standard. The network 200 comprises a first node 210 and a second node 220. The network 200 further comprises a first transmission path 230 which is used to transmit packets from the first node 210 to the second node 220 and a second transmission path 250 which is used to transmit packets from the second node 220 to the first node 210. The time taken to transmit a packet from the first node 210 to the second node 220 using the first transmission path 230 is the first path delay. The time taken to transmit a packet from the second node 220 to the first node 210 using the second transmission path 250 is the second path delay. The first and second path delays are determined using an exchange of packets to/from the first node 210 and the second node 220, for example using the two-way timing protocol of Figure 1 but alternatively may use any other suitable timing protocol.

In this example, the first node 210 comprises a network management system (NMS) (not shown) which autonomously receives performance data from the current data record of the second node 220 and uses this data to detect asymmetric changes in the first and second path delays.

Alternatively/additionally, the NMS may be comprised in an external and/or remote server, a higher level node in the synchronisation network 200 or the like. One or more or all nodes in the network may comprise NMS functionality which may include, but is not limited to, collection and/or transmission of PTP monitoring data (e.g. via Simple Network Management Protocol (SNMP)).

Figure 2b schematically illustrates the steps of a method 2000 for detecting and compensating for asymmetric path delay changes in a 'small' synchronisation network, such as the network 200 of Figure 2a.

At step S2100, the first and second path delays are monitored (e.g. sampled) over a first sample period and a second sample period. By monitoring the path delays over two sample periods any change in one or both of the path delays can be determined. The sampled values may be, for example the average, maximum or minimum value of the respective path delay at the end of the respective sample period. In this way spurious spikes or changes which occur over several samples can be appropriately monitored.

As described above with reference to Figure 1, the synchronisation network based on PTP, in addition to distributing timing and automatically determining and correcting offsets between the clocks of respective nodes to maintain optimal operation of the network, in parallel, can also be monitoring the synchronisation between clocks of respective nodes in the network.

Asymmetric path delay changes can produce similar effects to loss or degradation of clock synchronisation, and if not detected quickly enough, a clock correction may be applied, effectively masking the asymmetric path delay change. Typically, the synchronisation corrections may be actioned within 1 time constant of the clock of the respective network node. Therefore, the sample period(s) may be sufficiently less than 1 time constant to allow asymmetry path delay change detection and compensation to be performed.

At step S2200 the change in one or both of the first or second path delays is compared to a first threshold value. If the first threshold value is not exceeded monitoring step S2100 is repeated. The first threshold is larger than the expected wander and jitter in the network, such that the presence of a change in path delay asymmetry is not evaluated if the change is within expected variation during normal operation of the network reducing unnecessary burden and/or traffic on the network.

At step S2300 if a change in one or both of the first or second path delays exceeds the first threshold (at step S2200), the change in the difference between the first and second path delays between the first and second sample period is compared to a second threshold. If the second threshold value is not exceeded, monitoring step S2100 is repeated. If a change in the difference between the first and second path delays has occurred between the first and second sample periods, this indicates that an asymmetric change in path delays has occurred. By applying a threshold of asymmetric change, under which no further action is taken, any spurious or acceptable asymmetric changes in path delays are filtered out further reducing unnecessary computational burden and/or traffic on the network. The second threshold may be larger than the first threshold, but significantly lower than a value of asymmetrical path delay change that could result in a failure of the network, but is not considered limited as such.

At step S2400 if a change in the difference between the first and second path delays exceeds the second threshold a compensatory corrective action may be carried out. The size and nature of the correction is based on the determined difference at Step S2300. In networks that support the feature, such as the IEEE1588 compliant network of Figure 2a, the correction may involve updating a delayAsymmetry parameter which allows the respective node to account for any known path delay asymmetry when monitoring the network for asynchronicities between clocks.

The method of Figure 2b can be performed in any synchronisation network with sufficient 'spare' bandwidth to continuously monitor the reported performance metrics in real time, determine any asymmetric path delay changes and perform corrective action to compensate for these changes. Such a network may be referred to a 'small' network. In 'large' networks with reduced bandwidth and/or a large number of nodes which may be layered or grouped or remote nodes, it may not be possible for the network to continuously monitor path delays between all nodes without negatively impacting the performance of the network.

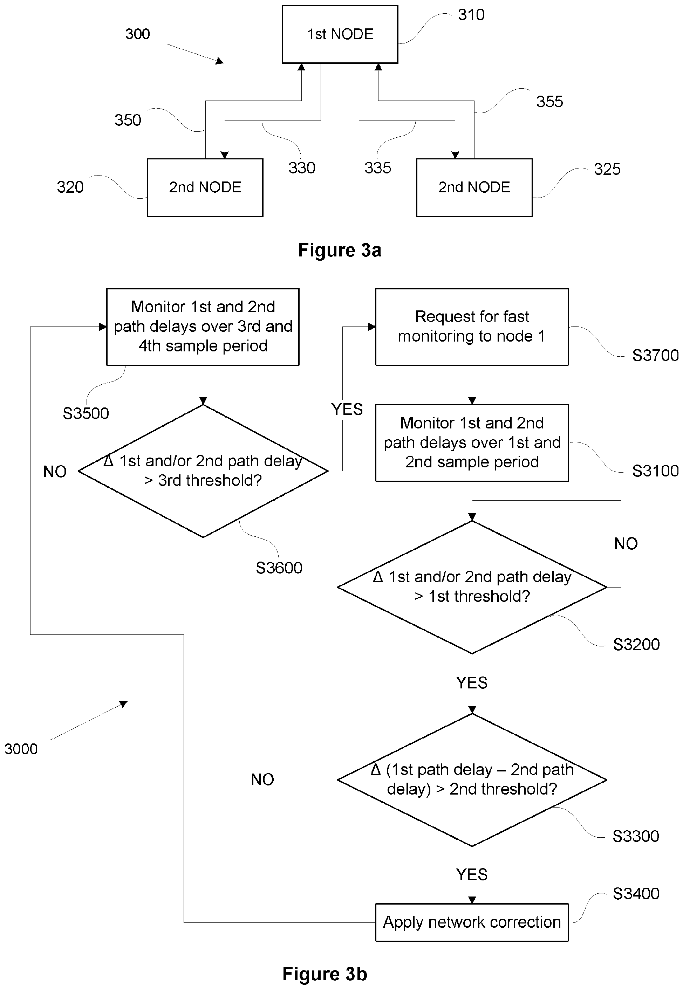

Figure 3a is a schematic illustration of a 'large' synchronisation network 300 complying with the IEEE1588 standard. Alternatively, the network may comply with another industry standard e.g. ITU-T, a proprietary standard or no standard. The network 300 comprises a first node 310 and a plurality of second nodes 320, 325. The network 300 further comprises a plurality of first transmission paths 330, 335 which are used to transmit packets from the first node 310 to the plurality of second nodes 320, 325 and a plurality of second transmission paths 350, 355 which are used to transmit packets from the plurality of second nodes 230, 235 to the first node 310. The time taken to transmit a packet from the first node 310 to the second node 320 using the first transmission path 330 is the first path delay. The time taken to transmit a packet from the second node 320 to the first node 310 using the second transmission path 350 is the second path delay. The first and second path delays are determined using an exchange of packets to/from the first node 310 and the second node 320, for example using the two-way timing protocol of Figure 1 but alternatively may use any other suitable timing protocol. Although network 300 is comprised of two second nodes, it would be understood that the network may comprise more than two second nodes, the second nodes may be layered and/or some of the second nodes may be similar, the same or different.

The first node 310 comprises a network management system (not shown) which autonomously periodically receives high level performance data from the plurality of second nodes 320, 325 e.g. every 3 minutes, 15 minutes or in response to an event, and uses this data to detect a change in the first and second path delays. Alternatively, the plurality of second nodes 320, 325 can monitor path delays between themselves and other nodes in the network 300.

Alternatively/additionally, the NMS may be comprised in an external and/or remote server, a higher level node in the synchronisation network 300 or the like. One or more or all nodes in the network may comprise NMS functionality which may include, but is not limited to, collection and/or transmission of PTP monitoring data (e.g. via Simple Network Management Protocol (SNMP)).

If the NMS comprised in the first node 310 and/or one of the plurality of second nodes 320, 325 determines that one or both of the respective first and second path delays has changed by more than a predetermined threshold a more accurate and detailed monitoring method (such as the method 200 of Figure 2) may be initiated and handled by the NMS. In this way the traffic burden on the network 300 may be reduced as the high intensity monitoring is only performed between nodes which have indicated that a path delay change has exceeded a threshold.

Figure 3b schematically illustrates the steps of a method 3000 for detecting and compensating for asymmetric path delay changes in a 'large' synchronisation network, such as the network 300 of Figure 3a.

At step S3500, the plurality of first and second path delays are monitored (e.g. sampled) over a third sample period and a fourth sample period. By monitoring the path delays over two sample periods any change in one or both of the path delays can be determined. By performing this high level monitoring of the path delays between a large number of nodes, rather than the fast monitoring method of Figure 2b the monitoring activity does not unduly degrade the performance of the network.

At step S3600 the change in one or both of the first or second path delays is compared to a third threshold value. If the third threshold value is not exceeded monitoring step S3500 is repeated. The third threshold is smaller than the first threshold, such that the bandwidth intensive fast monitoring is only requested when it is likely that a change in the first or second path delay is larger than the expected wander and jitter in the network. The third threshold value may alternatively be the same or larger than the first threshold. The third threshold may depend on the available bandwidth available to perform the fast monitoring method.

At step S3700 if a change in any of the first or plurality of second path delays exceeds a threshold (at step S3600), a request is made to the NMS (which may be comprised in the first node) to initiate fast monitoring of the change in path delays between the first node and second node which exceeded the third threshold at step S3600.

The method of Figure 2b is then performed where the first and second path delays of step S3100 (equivalent to the first and second path delays of step S2100 of Figure 2b) are the path delays whose change exceeded the third threshold at step S3600.

If the change in path delay during the fast monitoring does not exceed the first threshold (at step S3200) or an asymmetric path delay change does not exceed a second threshold (at step S3300) the method returns to the high level monitoring of step S3500. Alternatively, the method may repeat steps S3100, S3200, S3300 a determined number of times before returning to high level monitoring step S3500. The determined number of times may be preset by a user or installer of the network or may be based on the real time available bandwidth in and/or performance of the network.

The sampled values may be, for example the average, maximum or minimum value of the respective path delay at the end of the respective sample period. In this way spurious spikes or changes which occur over several samples can be appropriately monitored.

At step S3600 the change in one or both of the first or second path delays is compared to a third threshold value. If the third threshold value is not exceeded monitoring step S3500 is repeated. The third threshold is smaller than the first threshold, such that the bandwidth intensive fast monitoring is only requested when it is likely that a change in the first or second path delay is larger than the expected wander and jitter in the network.

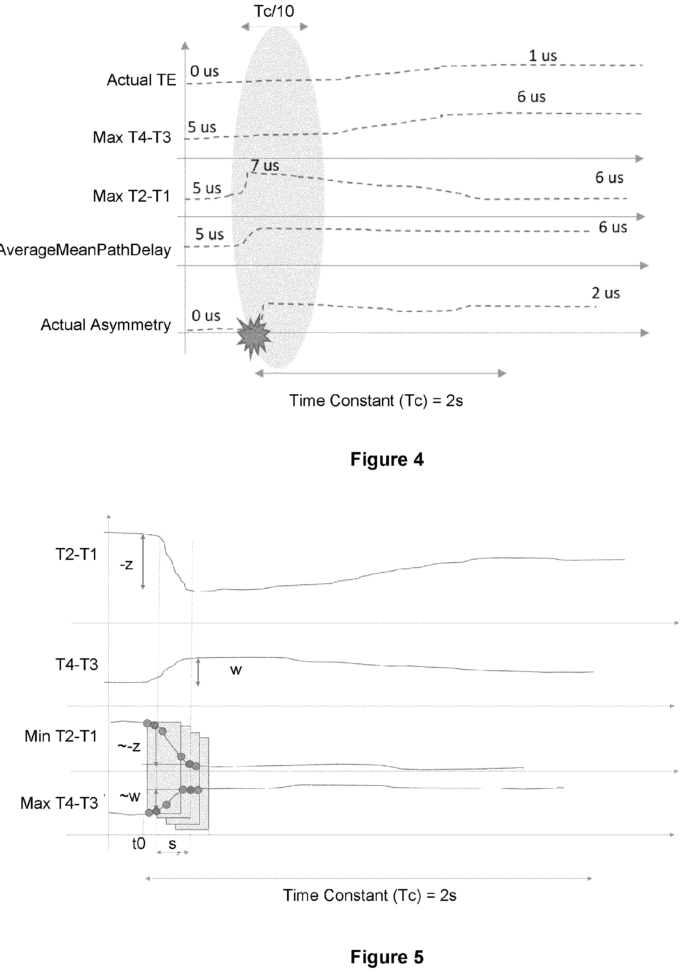

Figure 4 shows an example of an asymmetric path delay change a synchronisation network, such as the synchronisation network of Figure 2a. In this example it is assumed that the network starts with symmetrical path delays i.e. the first path delay and the second path delay 5uS i.e. are the same. It is also assumed that the network has full timing support (FTS) as defined by ITU-T G.8275.1. FTS clocks have time constant in the order of two seconds. The maximum respective first and second path delays over a sample period are monitored.

The network 200 experiences a sudden asymmetric change of path delay in first transmission path 230 (e.g. due to power up, fibre replacement or network rearrangement) where sudden means significantly less than 1 second. By monitoring the current value data as defined by Annex F of ITU-T, the NMS can detect that the asymmetric change of path delay is due to a sudden change on the first transmission path 230.

In the example of Figure 4 a power up event changes a buffer position by 2us, only for packets transmitted over the first transmission path 230 increasing the first path delay from 5us to 7us. As a result, an asymmetric change in path delay occurs. The first path delay plus the second path delay (the round trip delay) increases from 10us to 12us and the mean path delay therefore increases from 5us to 6us. After one time constant (in this case 2s) the network will have compensated for this change by 'correcting' the clock of the second node 220 such that it appears synchronised with the clock of the first node 210. Changing the local clock of the second node 210 consequentially changes the measured path delay, which is based on the transmit/receive times local to the respective node where the packet is transmitted/received.

As shown in Figure 4, the maximum value of the first path delay over a sample period (denoted "Max T2-T1" in Figure 4) suddenly increases from 5us to 7us and consequently the average MPD (denoted "Average-MeanPathDelay" in Figure 4) suddenly increases from 5 to 6 us. This indicates that something has changed, but it is not clear from this alone if there has been an asymmetric change in the path delays. The difference between the first path delay ("Max T2-T1" in Figure 4) and the second path delay ("Max T4-T3" in Figure 4) initially jumps from 0 to 2 us and then back to zero as the network automatically compensates for the apparent degradation in clock synchronisation by 'correcting' the clock of the second node 220. This example shows how the information on the actual change in path delay asymmetry (the sudden, but temporary 2uS change in the offset) may get lost after only one time constant of the FTS clock, unless parameters to monitor are properly chosen. Moreover, the 'correction' of the clock of the second node 220 in the example above introduces an actual time error (Actual TE) which cannot easily be detected and, if large enough, may result in network degradation or failure.

Figure 5 shows a further example of an asymmetric path delay change in a synchronisation network, such as the synchronisation network of Figure 2a. In this example it is again assumed that the network has full timing support (FTS) as defined by ITU-T G.8275 and G.8275.1 but the network starts with asymmetrical path delays which have already been compensated for (e.g. during installation of the network). In this example the minimum value of the first path delay (denoted "Min T2-T1" in Figure 5) and the maximum value of the second path delay (denoted "Max T4-T3" in Figure 5) are monitored over successive sample periods (denoted "s" in Figure 5). Within each sample period s a number of measurements or samples are taken (shown by the successive circles in Figure 5). In the example of Figure 5 the sample periods s overlap each other and the maximum and/or minimum values are determined over each respective sample period s.

In the example of Figure 5, a short period after t0 a change in the first and second path delays occurs. First path delay (T2-T1) decreases by z and second path delay (T4-T3) increases by w i.e. an asymmetric change in path delays occurs. Within one time constant Tc of the network clock, the clocks are 'corrected' by the network such that both the first and second path delays tend towards the MPD i.e. the first path delay increases by (w-z)/2 and the second path delay decreases by (w-z)/2, again effectively masking the asymmetric path delay change.

As shown by Figure 5, by monitoring changes in the minimum value of the first path delay and maximum value of the second path delay over successive sample periods the actual asymmetric change in path delays (-z-w in Figure 5) can be determined.

It is possible to monitor max and min T2-T1 and max and min T4-T3 in near real time, for example, using the current values as defined by ITU-T. The monitoring and analysis can be performed over 1/10 of the time constant of the FTS clock, i.e., over 200ms (3 packets). The real time signed difference between (T4-T3) and (T2-T1) provides the change in path delay asymmetry.

In case of nodes with only partial timing support the clock bandwidths and related time constants are significant larger (e.g. in the order of tens of minutes). At the same time, in addition to possible sudden changes, there can be path delay asymmetry changes created by changes in traffic load, and this can happen over long periods, from minutes to hours. The longer time constants allow for additional time to monitor and detect asymmetric changes in path delays. Slow changes may not allow for highly accurate asymmetry change estimates, but could help in indicating potential issues, and indicate where further monitoring should be directed.

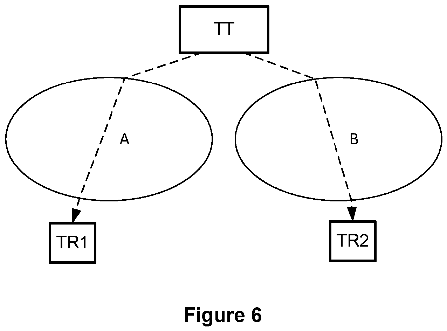

Figure 6 shows an example of a network with network paths comprising only partial timing support. By monitoring the path delays associated with a first transmission path A between a time transmitter TT and a first time receiver TR1 and a second transmission path B from the same time transmitter TT and a second time receiver TR2 is possible to get additional important insights into the performance of the network. For example, assuming that the network topology is known, if the standard deviation of change in path delays on transmission path A is greater than on transmission path B, this may indicate that there is excessive noise in transmission path A which may be creating asymmetries in path delays.

The terms "having", "containing", "including", "comprising" and the like are open and the terms indicate the presence of stated structures, elements or features but not preclude the presence of additional elements or features. The articles "a", "an" and "the" are intended to include the plural as well as the singular, unless the context clearly indicates otherwise.

Although specific examples of detecting asymmetric changes in path delays in a synchronisation network are described above in relation to the Figures, it will be appreciated that variations on the above examples are possible.

For example, the method can be implemented by test equipment placed in line with a transmission path who's path delay is to be monitored or alternatively may 'tap' into the transmission path without significantly altering the path delay. This allows the method to be implemented in a network which comprises both nodes that do and do not support the same (or any) appropriate timing protocol standard e.g. (PTP, NTP). In particular, the path delay between a node supporting an appropriate standard and a node which does not fully/partially support the standard may be determined. This also allows devices supporting the Small Form-factor Pluggable (SFP) interface module format to be tested even if they have no, or limited, support for two-way timing protocols.

Although the disclosure has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the disclosure, whether alone or in any appropriate combination with any other feature disclosed or illustrated herein.

## Claims

1. A method for detecting asymmetric path delay changes in a synchronisation network, the method comprising:

   monitoring a first path delay and a second path delay over a first sample period and a second sample period, wherein the first path delay is a reported time taken for a first packet transmitted by a first node of the network to be received by a second node of the network, and the second path delay is a time taken for a second packet transmitted by the second node of the network to be received by the first node of the network;
   determining that a change in one or both of the first and second path delays between the first sample period and the second sample period exceeds a first threshold; and
   determining, when it is determined that the first threshold is exceeded and when a difference between the first and second path delays changes between the first sample period and the second sample period, that the change in one or both of the first and second path delays is an asymmetric path delay change.

2. The method of claim 1 wherein the method further comprises:
   applying, when it is determined that the first threshold is exceeded and when a change in the difference between the first and second path delays between the first sample period and the second sample period exceeds a second threshold, a correction to the network,
   wherein the correction is based on the change in the difference between the first and second path delays between the first sample period and the second sample period.

3. The method of any preceding claim wherein the duration of the first sample period and/or the second sample period is less than a time constant of a synchronisation clock of the synchronisation network.

4. The method of any preceding claim wherein the first threshold is based on an expected dynamic Time Error, dTE, of the network.

5. The method of any one of claims 2 to 4 wherein the second threshold is based on the expected dTE of the network and/or a maximum time error which would result in a failure of the network.

6. The method of any preceding claim wherein:
   monitoring the first path delay and the second path delay comprises determining an average value of the respective first path delay and/or the second path delay over the first sample period and/or the second sample period.

7. The method of any preceding claim wherein:
   monitoring the first path delay and the second path delay comprises determining a maximum value of the respective first path delay and/or the second path delay over the first sample period and/or the second sample period.

8. The method of any preceding claim wherein:
   monitoring the first path delay and the second path delay comprises determining the minimum value of the respective first path delay and/or the second path delay over the first sample period and/or the second sample period.

9. A method of for detecting asymmetric path delay changes in a synchronisation network, said synchronisation network comprising a first node and a plurality of second nodes, the method comprising:

   monitoring a plurality of first path delays and a plurality of second path delays over a third sample period and a fourth sample period, wherein each of the first path delays is a reported time taken for a packet transmitted by the first node of the network to be received by one of the plurality of second nodes of the network, and each of the second path delays is a time taken for a packet transmitted by the one of the plurality of second nodes of the network to be received by the first node of the network;
   determining that a change in one or both of each of any one of the respective first and second path delays between the third sample period and the fourth sample period exceeds a third threshold;

and
performing the method of any one of claims 1 to 8 on the respective first and second nodes.

10. The method of any preceding claim wherein at least one of the first and second nodes comprises full or partial timing support as defined by ITU-T G.8275.

11. A network management system, NMS, comprising a set of computer readable instructions or process protocols or computer code configured such that, when processed by network equipment, permit, control or cause the network equipment, or provide instructions or data for the network equipment, to perform the method of any of claims 1 to 10.

12. A synchronisation network comprising:

a plurality of nodes; and
the NMS of claim 11.

13. The synchronisation network of claim 12 wherein one of the plurality of nodes comprises the NMS.

14. The synchronisation network of claim 12 further comprising test equipment coupled to one or more of the plurality of nodes, wherein the external test equipment comprises the NMS.

15. The synchronisation network of any one of claims 12 to 14 wherein one or more of the nodes supports the Small Form-factor Pluggable, SFP, interface module standard.

**Figure 1 (PRIOR ART)**

200

1st NODE — 210

230 — — 250

2nd NODE — 220

**Figure 2a**

2000

Monitor 1st and 2nd path delays over 1st and 2nd sample period — S2100

NO — $\Delta$ 1st and/or 2nd path delay > 1st threshold? — S2200

YES

NO — $\Delta$ (1st path delay − 2nd path delay) > 2nd threshold? — S2300

YES

Apply network correction — S2400

**Figure 2b**

Figure 3a

Figure 3b

Figure 4

Figure 5

**Figure 6**

Europäisches
Patentamt

European
Patent Office

Office européen
des brevets

# EUROPEAN SEARCH REPORT

**Application Number**

EP 24 19 6010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/287725 A1 (RABINOVICH MICHAEL [IL] ET AL) 4 October 2018 (2018-10-04) * paragraph [0005] - paragraph [0009] * * paragraph [0037] - paragraph [0038] * * paragraph [0052] - paragraph [0061] * * paragraph [0058] - paragraph [0059] * * figures 3-5 * * paragraph [0046] * | 1-15 | INV. H04J3/06 H04L43/0852 |
| A | WO 2023/060390 A1 (ERICSSON TELEFON AB L M [SE]; WANG JUN [CN]) 20 April 2023 (2023-04-20) * paragraph [0007] - paragraph [0009] * * paragraph [0046] * * paragraph [0055] * * paragraph [0058] - paragraph [0059] * * paragraph [0072] - paragraph [0076] * * figures 4,5,10 * | 1-15 | |
| A | US 9 813 175 B2 (BOTTARI GIULIO [IT] ET AL) 7 November 2017 (2017-11-07) * column 1, line 15 - line 26 * * column 2, line 3 - line 24 * * column 3, line 59 - line 67 * * column 4, line 35 - line 46 * | 1-15 | TECHNICAL FIELDS SEARCHED (IPC) H04L H04J |

The present search report has been drawn up for all claims

| Place of search | Date of completion of the search | Examiner |
|---|---|---|
| The Hague | 9 January 2025 | Marongiu, M |

## ANNEX TO THE EUROPEAN SEARCH REPORT
## ON EUROPEAN PATENT APPLICATION NO.

EP 24 19 6010

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2025

| Patent document cited in search report | Publication date | Patent family member(s) | | Publication date |
|---|---|---|---|---|
| US 2018287725 A1 | 04-10-2018 | EP | 3382918 A1 | 03-10-2018 |
| | | US | 2018287725 A1 | 04-10-2018 |
| WO 2023060390 A1 | 20-04-2023 | EP | 4416872 A1 | 21-08-2024 |
| | | US | 2024413921 A1 | 12-12-2024 |
| | | WO | 2023060390 A1 | 20-04-2023 |
| US 9813175 B2 | 07-11-2017 | CA | 2921761 A1 | 26-02-2015 |
| | | CN | 105723638 A | 29-06-2016 |
| | | EP | 3036851 A1 | 29-06-2016 |
| | | KR | 20160044550 A | 25-04-2016 |
| | | RU | 2016110099 A | 27-09-2017 |
| | | US | 2016211936 A1 | 21-07-2016 |
| | | WO | 2015024599 A1 | 26-02-2015 |

EPO FORM P0459

For more details about this annex : see Official Journal of the European Patent Office, No. 12/82